Europäisches Patentamt

European Patent Office

Office européen des brevets

(19)

(11) **EP 0 452 915 B1**

(12) # EUROPEAN PATENT SPECIFICATION

(45) Date of publication and mention
of the grant of the patent:
**07.01.1999 Bulletin 1999/01**

(51) Int Cl.6: **G01T 1/29**

(21) Application number: **91106174.5**

(22) Date of filing: **17.04.1991**

(54) **Apparatus for adjusting read-out conditions and/or image processing conditions for radiation images**

Vorrichtung zum Einstellen von Auslese- und/oder Bildverarbeitungsbedingungen für Strahlungsbilder

Appareil pour ajuster des conditions de lecture et/ou des conditions de traitement d'images obtenus par radiations

(84) Designated Contracting States:
**DE FR NL**

(30) Priority: 18.04.1990 JP 102015/90
19.04.1990 JP 103392/90
31.07.1990 JP 203070/90
20.08.1990 JP 218483/90
14.09.1990 JP 244193/90
15.10.1990 JP 275584/90
17.10.1990 JP 277996/90
19.10.1990 JP 282801/90
15.03.1991 JP 51132/91
13.03.1991 JP 48362/91
05.04.1991 JP 73268/91

(43) Date of publication of application:
**23.10.1991 Bulletin 1991/43**

(60) Divisional application: **96106224.7 / 0 726 542**

(73) Proprietor: **Fuji Photo Film Co., Ltd.**
**Kanagawa-ken (JP)**

(72) Inventors:
• **Takeo, Hideya, c/o Fuji Photo Film Co. Ltd.**
**Ashigarakami-gun, Kanagawa-ken (JP)**
• **Ito, Wataru, c/o Fuji Photo Film Co. Ltd.**
**Ashigarakami-gun, Kanagawa-ken (JP)**
• **Shimura, Kazuo, c/o Fuji Photo Film Co. Ltd.**
**Ashigarakami-gun, Kanagawa-ken (JP)**

(74) Representative: **Klunker . Schmitt-Nilson . Hirsch**
**Winzererstrasse 106**
**80797 München (DE)**

(56) References cited:
**EP-A- 0 409 206** **US-A- 4 887 305**

• **OPTICAL ENGINEERING vol. 25, no. 2, February 1986, BELLINGHAM US pages 296 - 302 GUY INDEBETOUW 'Statistical image processing with a hybrid flying window scanning system'**

## Description

This invention relates to an apparatus for adjusting read-out conditions and/or image processing conditions for a radiation image, wherein read-out conditions, under which a radiation image is to be read out, and/or image processing conditions, under which an image signal representing the radiation image is to be processed, are adjusted on the basis of the image signal representing the radiation image.

Description of the Prior Art

Techniques for reading out a recorded radiation image in order to obtain an image signal, carrying out appropriate image processing on the image signal, and then reproducing a visible image by use of the processed image signal have heretofore been known in various fields. For example, as disclosed in Japanese Patent Publication No. 61(1986)-5193, an X-ray image is recorded on an X-ray film having a small gamma value chosen according to the type of image processing to be carried out, the X-ray image is read out from the X-ray film and converted into an electric signal (image signal), and the image signal is processed and then used for reproducing the X-ray image as a visible image on a copy photograph, or the like. In this manner, a visible image having good image quality with high contrast, high sharpness, high graininess, or the like can be reproduced.

Also, when certain kinds of phosphors are exposed to radiation such as X-rays, $\alpha$-rays, $\beta$-rays, $\gamma$-rays, cathode rays or ultraviolet rays, they store part of the energy of the radiation. Then, when the phosphor which has been exposed to the radiation is exposed to stimulating rays such as visible light, light is emitted by the phosphor in proportion to the amount of energy stored thereon during its exposure to the radiation. A phosphor exhibiting such properties is referred to as a stimulable phosphor.

As disclosed in U.S. Patent Nos. 4,258,264, 4,276,473, 4,315,318, 4,387,428, and Japanese Unexamined Patent Publication No. 56(1981)-11395, it has been proposed to use stimulable phosphors in radiation image recording and reproducing systems. Specifically, a sheet provided with a layer of the stimulable phosphor (hereinafter referred to as a stimulable phosphor sheet) is first exposed to radiation which has passed through an object, such as the human body. A radiation image of the object is thereby stored on the stimulable phosphor sheet. The stimulable phosphor sheet is then scanned with stimulating rays, such as a laser beam, which cause it to emit light in proportion to the amount of energy stored thereon during its exposure to the radiation. The light emitted by the stimulable phosphor sheet, upon stimulation thereof, is photoelectrically detected and converted into an electric image signal. The image signal is then used during the reproduction of the radiation image of the object as a visible image on a recording material such as photographic film, on a display device such as a cathode ray tube (CRT) display device, or the like.

Radiation image recording and reproducing systems which use stimulable phosphor sheets are advantageous over conventional radiography using silver halide photographic materials, in that images can be recorded even when the energy intensity of the radiation to which the stimulable phosphor sheet is exposed varies over a wide range. More specifically, since the amount of light which the stimulable phosphor sheet emits when being stimulated varies over a wide range and is proportional to the amount of energy stored thereon during its exposure to the radiation, it is possible to obtain an image having a desirable density regardless of the energy intensity of the radiation to which the stimulable phosphor sheet was exposed. In order to obtain the desired image density, an appropriate read-out gain is set when the emitted light is being detected and converted into an electric signal to be used in the reproduction of a visible image on a recording material, such as photographic film, or on a display device, such as a CRT display device.

In order for an image signal to be detected accurately, certain factors which affect the image signal must be set in accordance with the dose of radiation delivered to the stimulable phosphor sheet and the like. Novel radiation image recording and reproducing systems which accurately detect an image signal have been proposed. The proposed radiation image recording and reproducing systems are constituted such that a preliminary read-out operation (hereinafter simply referred to as the "preliminary readout") is carried out in order approximately to ascertain the radiation image stored on the stimulable phosphor sheet. In the preliminary readout, the stimulable phosphor sheet is scanned with a light beam having a comparatively low energy level, and a preliminary read-out image signal obtained during the preliminary readout is analyzed. Thereafter, a final read-out operation (hereinafter simply referred to as the "final readout") is carried out to obtain the image signal, which is to be used during the reproduction of a visible image. In the final readout, the stimulable phosphor sheet is scanned with a light beam having an energy level higher than the energy level of the light beam used in the preliminary readout, and the radiation image is read out with the factors affecting the image signal adjusted to appropriate values on the basis of the results of an analysis of the preliminary read-out image signal.

The term "read-out conditions" as used hereinafter means a group of various factors, which are adjustable and which affect the relationship between the amount of light emitted by the stimulable phosphor sheet during image readout and the output of a read-out means. For example, the term "read-out conditions" may refer to a read-out gain and a scale factor which define the relationship between the input to the read-out means and the output therefrom, or to the power of the stimulating rays used when the radiation image is read out.

The term "energy level of a light beam" as used herein means the level of energy of the light beam to which the stimulable phosphor sheet is exposed per unit area. In cases where the energy of the light emitted by the stimulable phosphor sheet depends on the wavelength of the irradiated light beam, i.e. the sensitivity of the stimulable phosphor sheet to the irradiated light beam depends upon the wavelength of the irradiated light beam, the term "energy level of a light beam" means the weighted energy level which is calculated by weighting the energy level of the light beam, to which the stimulable phosphor sheet is exposed per unit area, with the sensitivity of the stimulable phosphor sheet to the wavelength. In order to change the energy level of a light beam, light beams of different wavelengths may be used, the intensity of the light beam produced by a laser beam source or the like may be changed, or the intensity of the light beam may be changed by moving an ND filter or the like into and out of the optical path of the light beam. Alternatively, the diameter of the light beam may be changed in order to alter the scanning density, or the speed at which the stimulable phosphor sheet is scanned with the light beam may be changed.

Regardless of whether the preliminary readout is or is not carried out, it has also been proposed to analyze the image signal (including the preliminary read-out image signal) obtained and to adjust the image processing conditions, which are to be used when the image signal is processed, on the basis of the results of an analysis of the image signal. The term "image processing conditions" as used herein means a group of various factors, which are adjustable and set when an image signal is subjected to processing, which affect the gradation, sensitivity, or the like, of a visible image reproduced from the image signal. The proposed method is applicable to cases where an image signal is obtained from a radiation image recorded on a recording medium such as conventional X-ray film, as well as to systems using stimulable phosphor sheets.

As disclosed in, for example, Japanese Unexamined Patent Publication Nos. 60(1985)-185944 and 61(1986)-280163, operations for calculating the values of the read-out conditions for the final readout and/or the image processing conditions are carried out by a group of algorithms which analyze an image signal (or a preliminary read-out image signal). A large number of image signals detected from a large number of radiation images are statistically processed. The algorithms which calculate the read-out conditions for the final readout and/or the image processing conditions are designed on the basis of the results obtained from this processing.

In general, the algorithms which have heretofore been employed are designed such that a probability density function of an image signal is created, and characteristic values are found from the probability density function. The characteristic values include, for example, the maximum value of the image signal, the minimum value of the image signal, or the value of the image signal at which the probability density function is maximum, i.e. the value which occurs most frequently. The read-out conditions for the final readout and/or the image processing conditions are determined on the basis of the characteristic values.

Methods for determining the read-out conditions for the final readout and/or the image processing conditions on the basis of the results of an analysis of the probability density function of an image signal can be classified into the following:

(1) a method as disclosed in Japanese Unexamined Patent Publication No. 60(1985)-156055 wherein both the maximum value and the minimum value in the range resulting in a reproduced visible image containing the necessary image information are determined from a probability density function of an image signal, and, for example, the read-out conditions for the final readout are set such that, during the final readout, the image information represented by values of the emitted light signal falling within the range of the maximum value to the minimum value is detected accurately,

(2) a method as disclosed in Japanese Unexamined Patent Publication No. 60(1985)-185944 wherein only the maximum value is determined from a probability density function of an image signal, a value obtained by subtracting a predetermined value from the maximum value is taken as the minimum value, and the range between the maximum value and the minimum value is taken as the range resulting in a visible image containing the necessary image information,

(3) a method as disclosed in Japanese Unexamined Patent Publication No. 61(1986)-280163 wherein only the minimum value is determined from a probability density function of an image signal, a value obtained by adding a predetermined value to the minimum value is taken as the maximum value, and the range between the minimum value and the maximum value is taken as the range resulting in a visible image containing the necessary image information,

(4) a method as proposed in Japanese Unexamined Patent Publication No. 63(1988)-233658 wherein a difference probability density function is used,

(5) a method as disclosed in Japanese Unexamined Patent Publication No. 61(1986)-170730 wherein a cumulative probability density function is used, and

(6) a method as proposed in Japanese Unexamined Patent Publication No. 63(1988)-262141 wherein a probability density function is divided into a plurality of small regions by using a discrimination standard. The range of an image signal resulting in a visible image containing the necessary image information is determined with one of various methods, and the read-out conditions for the final readout and/or the image processing conditions are set with respect to said range.

Recently, a method for utilizing a neural network, which is quite different from the algorithms described above, have been proposed.

The neural network is provided with a learning function by back propagation method. Specifically, when information (an instructor signal), which represents whether an output signal obtained when an input signal is given is or is not correct, is fed into the neural network, the weight of connections between units in the neural network (i.e. the weight of synapse connections) is corrected. By repeating the learning of the neural network, the probability that a correct answer will be obtained in response to a new input signal can be kept high. (Such functions are described in, for example, "Learning representations by back-propagating errors" by D. E. Rumelhart, G. E. Hinton and R. J. Williams, Nature, 323-9,533-356, 1986a; "Back-propagation" by Hideki Aso, Computrol, No. 24, pp. 53-60; and "Neural Computer" by Kazuyuki Aihara, the publishing bureau of Tokyo Denki University).

The neural network is also applicable when the read-out conditions for the final readout and/or the image processing conditions are to be adjusted. By feeding an image signal, or the like, into the neural network, outputs representing the values of the read-out conditions for the final readout and/or the image processing conditions can be obtained from the neural network.

When the neural network is utilized to adjust the read-out conditions for the final readout and/or the image processing conditions, by repeating the learning of the neural network, the read-out conditions for the final readout and/or the image processing conditions appropriate for a specific radiation image can be determined. However, in a single system for processing X-ray images of, for example, the shoulder of a human body, various types of image signals are obtained which represent various radiation images, such as the images of the right shoulder and the left shoulder (reversed images), an enlarged image and a reduced image, an erect image and a side image and an inverted image, and images shifted from each other. In order for a neural network to be constructed which can determine the read-out conditions for the final readout and/or the image processing conditions appropriate for each of various such images, a very large number of units should be incorporated in the neural network. Also, a storage means should be used which has a very large capacity for storing information representing the weight of connections between units in the neural network. Additionally, the learning of the neural network should be repeated very many times.

EP-A-0 409 206 (published after the priority dates of this application) discloses an apparatus for adjusting image processing conditions in a digital image display apparatus, wherein digital image data are obtained from an MRI or a CT system. The frequency distribution of the pixel values of the image data is calculated. Moreover, a plurality of image qualities is calculated for indicating clarity of a display image in accordance with the plurality of pixel value-to-brightness conversion modes. Then, the most suitable conversion mode is selected on the basis of the image qualities.

US-A-4 887 305 discloses a method for adjusting read-out conditions for a radiation image in accordance with the maximum and the minimum image signal level. The image signal level is measured by carrying out a preliminary read-out step.

The primary object of the present invention is to provide an apparatus for adjusting read-out conditions and/or image processing conditions for a radiation image wherein, even if various image signals representing various radiation images are obtained, the read-out conditions for the final readout and/or the image processing conditions appropriate for each of the various radiation images are determined by a neural network provided with a comparatively small number of units.

This is achieved by the apparatus having the features of claim 1 or claim 3.

According to the present invention a neural network provided with a comparatively small number of units is utilized, and characteristic measures representing characteristics of a radiation image, such as read-out conditions under which the radiation image is to be read out, image processing conditions under which the image signal representing the radiation image is to be processed, and the portion of an object the image of which was recorded, are found accurately from an image signal representing the radiation image.

A subdivision pattern of radiation images, the shape and location of an irradiation field, an orientation in which the object was placed when the image of the object was recorder, and/or a portion of an object the image of which was recorded is determined accurately from an image signal representing a radiation images.

An apparatus in accordance with the present invention is applicable when a stimulable phosphor sheet is used and the preliminary readout is carried out.

In the apparatus in accordance with the present invention, no limitation is imposed on what pattern is employed as the standard pattern of radiation images. The standard pattern may be selected in accordance with the concept behind the design of the apparatuses, or the like.

Also, no limitation is imposed on now the image signal or the first image signal representing the radiation image is transformed into a transformed image signal representing the radiation image, which has been transformed into the standard pattern. For example, the image signal or the first image signal representing the radiation image may be transformed into a transformed image signal representing the radiation image, which has been reversed, rotated, adjusted for the position, enlarged, or reduced.

The information representing the standard pattern of radiation images is stored in the storage means. When the image signal (or the first image signal) is obtained, from which the read-out conditions for the final readout and/or the image processing conditions are to be determined, the image signal representing the radiation image is transformed into a transformed image signal representing the radiation image, which has been transformed into the standard pattern. Thereafter, the transformed image signal is fed into the neural network. Therefore, a neural network having a small scale may be used, and a storage means having a small storage capacity may be used to store the weight of connections between units of the neural network. Also, when the level of accuracy, with which the read-out conditions for the final readout and/or the image processing conditions are to be determined, is kept the same, the learning of the neural network may be repeated only a fewer times than when a conventional technique is used.

The reasons why problems occur will be described hereinbelow by taking radiation images, in which patterns of a shoulder joint are embedded, as an example.

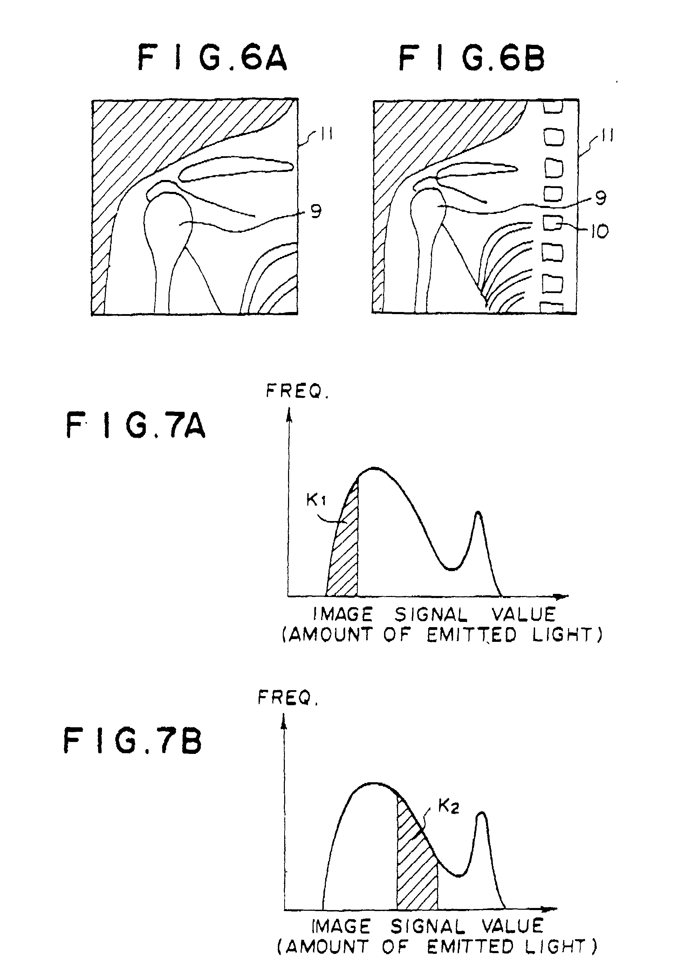

Figures 6A and 6B show radiation images in which a pattern of a shoulder joint 9 is embedded. The two radiation images differ from each other in that the radiation image of Figure 6B includes the patterns of vertebral bodies 10, and the radiation image of Figure 6A does not include them. Figures 7A and 7B show probability density functions of image signals representing the radiation images shown in Figures 6A and 6B.

As shown in Figures 7A and 7B, the two probability density functions are approximately identical with each other. However, the two radiation images have the difference described above. Therefore, the image signal components representing the pattern of the shoulder joint 9, which is taken as a region of interest, fall within the range K1 in the probability density function shown in Figure 7A and within the range K2 in the probability density function shown in Figure 7B. When the read-out conditions for the final readout and/or the image processing conditions are determined from each of the two probability density functions, and visible images of the radiation images shown in Figures 6A and 6B are reproduced from the image signals obtained under these conditions, because the two probability density functions are approximately identical with each other, approximately the same values are calculated as the read-out conditions for the final readout and/or the image processing conditions. As a result, two reproduced visible images are obtained which have approximately the same image density and contrast. Therefore, the image density of the pattern of the shoulder joint, which is taken as the region of interest, cannot be kept appropriate.

In such cases, the pattern of the region of interest is not illustrated clearly in the reproduced visible image. Also, for example, when a plurality of reproduced visible images are compared with each other in order for the course of an abnormal part of an object to be investigated, a correct diagnosis cannot be made.

The present invention eliminates the problems described above.

With the present invention, the neural network is used to determine the read-out conditions for the final readout and/or the image processing conditions. By repeating the learning of the neural network, appropriate read-out conditions for the final readout and/or appropriate image processing conditions can be determined.

Also, the learning of the neural network is carried out by utilizing an image signal representing a radiation image, in which a pattern of a specific region of interest in an object is embedded, and the read-out conditions for the final readout and/or the image processing conditions, which have been determined as being optimum for the pattern of the region of interest. Therefore, even if the radiation image includes the pattern of the region of interest and other patterns, the read-out conditions for the final readout and/or the image processing conditions can be set to values appropriate for the pattern of the region of interest.

By repeating the learning of the neural network, the shape and location of the pattern of the region of interest can be determined accurately. The read-out conditions for the final readout and/or the image processing conditions are then determined on the basis of the image signal components of the first image signal representing the pattern of the region of interest. Therefore, the read-out conditions for the final readout and/or the image processing conditions are basically free of adverse effects of the image information other than the pattern of the region of interest and can be set to be appropriate for the pattern of the region of interest.

Instead of all of the image signal components representing the picture elements located in the irradiation field being fed into the neural network, only some of these image signal components may be fed into the neural network. For example, these image signal components may be sampled alternately, and only the sampled components may be fed into the neural network. In such cases, a storage means having an even smaller storage capacity may be employed.

BRIEF DESCRIPTION OF THE DRAWINGS

Figures 1A and 1B are explanatory views showing X-ray images of the right and left shoulders,
Figures 2A and 2B are explanatory views showing a standard pattern and a reversed pattern,
Figure 3 is an explanatory view showing an example of a neural network,

Figure 4 is a schematic view showing an example of an X-ray image recording apparatus,

Figure 5 is a perspective view showing an example of an X-ray image read-out apparatus and an example of a computer system, in which an embodiment of the first apparatus in accordance with the present invention is employed,

Figures 6A and 6B are explanatory views showing X-ray images of the shoulder joint, and

Figures 7A and 7B are graphs showing patterns of probability density functions of image signals, which represent the X-ray images shown in Figures 6A and 6B.

DESCRIPTION OF THE PREFERRED EMBODIMENTS

The present invention will hereinbelow be described in further detail with reference to the accompanying drawings. In the embodiments described below, an X-ray image of the shoulder of a human body is stored on a stimulable phosphor sheet.

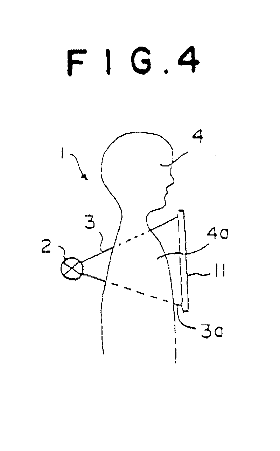

Figure 4 is a schematic view showing an example of an X-ray image recording apparatus.

With reference to Figure 4, X-rays 3 are produced by an X-ray source 2 of an X-ray image recording apparatus 1 and irradiated to the shoulder 4a of a human body 4. X-rays 3a, which have passed through the human body 4, impinge upon a stimulable phosphor sheet 11. In this manner, an X-ray image of the shoulder 4a of the human body 4 is stored on the stimulable phosphor sheet 11.

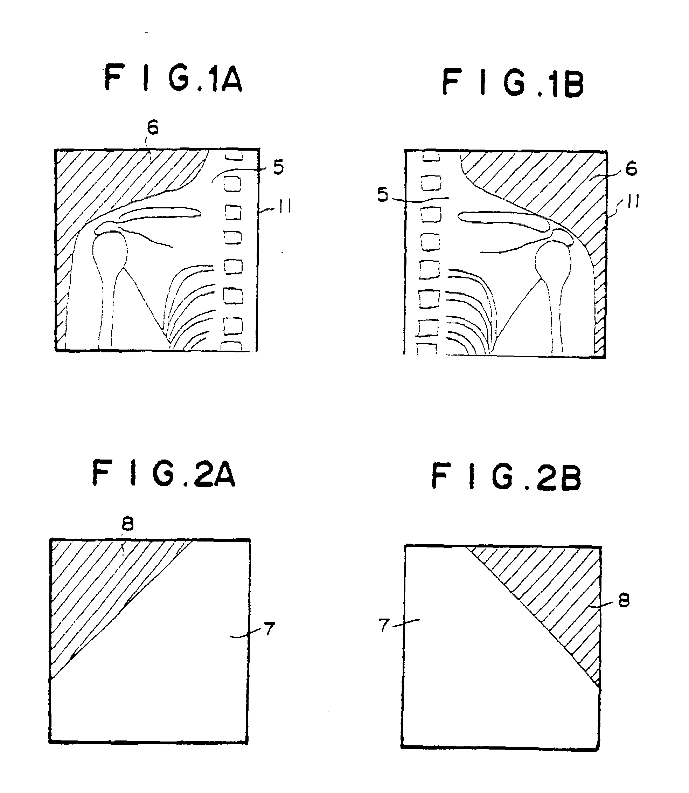

Figures 1A and 1B are explanatory views showing examples of X-ray images of the shoulders stored on stimulable phosphor sheets.

Figures 1A and 1B show the X-ray images of the right and left shoulders. Each of the X-ray images comprises an object image region 5, in which the pattern of the human body is stored, and a background region 6, upon which the X-rays impinged directly without passing through the object 4.

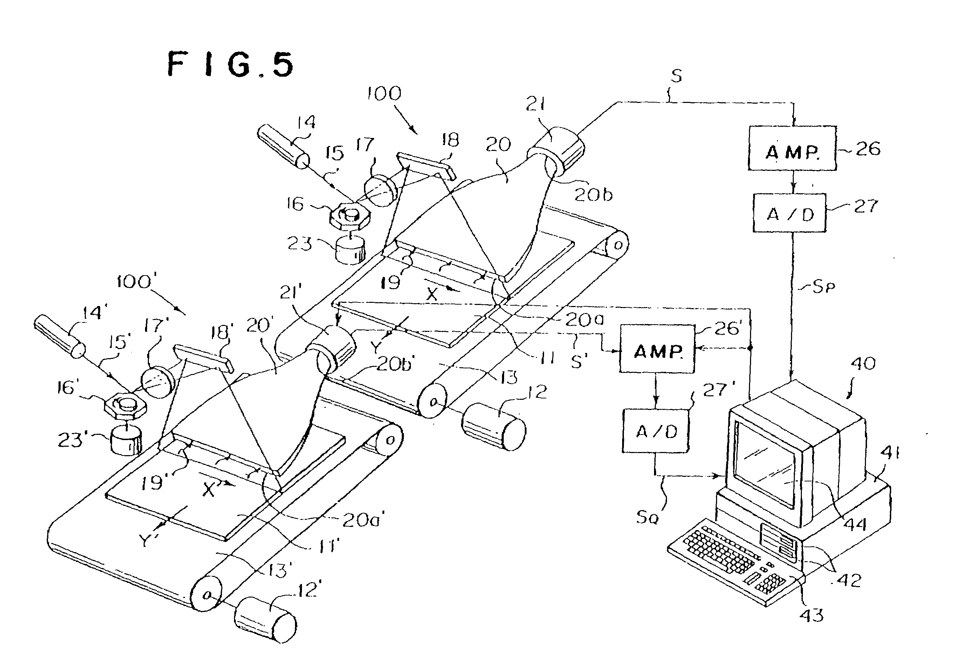

Figure 5 is a perspective view showing an example of an X-ray image read-out apparatus and an example of a computer system, in which an embodiment of the first apparatus in accordance with the present invention is employed. In this embodiment, by way of example, a stimulable phosphor sheet is used, and a preliminary readout is carried out.

The stimulable phosphor sheet 11, on which the X-ray image has been stored, is placed at a predetermined position in a preliminary read-out means 100 which carries out a preliminary readout by scanning the stimulable phosphor sheet 11 with a light beam having a low energy level, thereby releasing only part of the energy from the stimulable phosphor sheet 11, which energy was stored during its exposure to radiation. The stimulable phosphor sheet 11 is conveyed in a sub-scanning direction indicated by the arrow Y by a sheet conveyance means 13 which is constituted of an endless belt on the like and which is operated by a motor 12. A laser beam 15 which has a low energy level is produced by a laser beam source 14, and is reflected and deflected by a rotating polygon mirror 16 which is quickly rotated by a motor 23 in the direction indicated by the arrow. The laser beam 15 then passes through a converging lens 17 constituted of an fθ lens or the like. The direction of the optical path of the laser beam 15 is then changed by a mirror 18, and the laser beam 15 impinges upon the stimulable phosphor sheet 11 and scans it in a main scanning direction indicated by the arrow X, which direction is approximately normal to the sub-scanning direction indicated by the arrow Y. When the stimulable phosphor sheet 11 is exposed to the laser beam 15, the exposed portion of the stimulable phosphor sheet 11 emits light 19 in an amount proportional to the amount of energy stored thereon during its exposure to radiation. The emitted light 19 is guided by a light guide member 20 and photoelectrically detected by a photomultiplier 21. The light guide member 20 is made from a light guiding material such as an acrylic plate and has a linear light input face 20a, positioned so that it extends along the main scanning line on the stimulable phosphor sheet 11, and a ring-shaped light output face 20b, positioned so that it is in close contact with a light receiving face of the photomultiplier 21. The emitted light 19, which has entered the light guide member 20 at its light input face 20a, is guided through repeated total reflection inside of the light guide member 20, emanates from the light output face 20b, and is received by the photomultiplier 21. In this manner, the amount of the emitted light 19, which amount represents the X-ray image, is converted into an electric signal by the photomultiplier 21.

An analog output signal S generated by the photomultiplier 21 is logarithmically amplified by a logarithmic amplifier 26, and digitized by an A/D converter 27 into a preliminary read-out image signal SP. The preliminary read-out image signal SP takes a value proportional to the logarithmic value of the amount of the light 19, which was emitted from each of picture elements in the X-ray image stored on the stimulable phosphor sheet 11.

In the preliminary readout, read-out conditions, i.e. the voltage applied to the photomultiplier 21 and the amplification factor of the logarithmic amplifier 26, are adjusted so that image information can be detected accurately even if the amount of energy stored on the stimulable phosphor sheet 11 during its exposure to radiation varies over a wide range.

The preliminary read-out image signal SP obtained in the manner described above is fed into a computer system 40. The computer system 40 is provided with an embodiment of the first apparatus in accordance with the present invention. The computer system 40 comprises a main body 41 in which a CPU and an internal memory are incorporated, a disk drive unit 42 which operates a floppy disk serving as a subsidiary memory, a keyboard 43 from which necessary instructions, or the like, are fed into the computer system 40, and a CRT display device 44 which displays necessary information.

In the computer system 40, the read-out conditions for the final readout, i.e. the sensitivity and the contrast during the final readout, are determined in the manner described later. By way of example, the voltage applied to a photomultiplier 21' and the amplification factor of a logarithmic amplifier 26' are controlled in accordance with the sensitivity and the contrast.

The contrast corresponds to the ratio of the largest amount of emitted light, which is capable of being accurately converted into an image signal during the final readout, to the smallest amount of emitted light, which is capable of being accurately converted into an image signal during the final readout. The sensitivity corresponds to the photoelectric conversion factor, which represents to what image signal level a predetermined amount of emitted light is to be converted.

A stimulable phosphor sheet 11' on which the preliminary readout has been finished is placed at a predetermined position in the final read-out means 100' and scanned with a laser beam 15' having an energy level higher than that of the laser beam 15 used during the preliminary readout. In this manner, an image signal is detected under the read-out conditions which have been determined on the basis of the preliminary read-out image signal. The configuration of the final read-out means 100' is nearly the same as that of the preliminary read-out means 100, and therefore elements corresponding to those constituting the preliminary read-out means 100 are numbered with corresponding primed reference numerals in Figure 5.

After the image signal is digitized in an A/D converter 27', the resulting image signal SQ is fed into the computer system 40, which carries out appropriate image processing on the image signal SQ. After being image processed, the image signal is fed into a reproducing apparatus (not shown), which reproduces a visible image from the image signal.

How the computer system 40 adjusts the read-out conditions for the final readout on the basis of the preliminary read-out image signal SP will be described hereinbelow.

As shown in Figures 1A and 1B, during the recording of X-ray images of the shoulder, the images which are reversed approximately horizontally are often obtained. In such cases, a judgment is made in the manner described below as to whether the image is of the right shoulder (Figure 1A) or of the left shoulder (Figure 1B). In this embodiment, the image of the right shoulder shown in Figure 1A is taken as the standard pattern in the first apparatus in accordance with the present invention.

Figures 2A and 2B are explanatory views showing a standard pattern and a reversed pattern, which are represented by information stored in the computer system 40.

The standard pattern is composed of a first region 7, which is represented by a mean-level value of the preliminary read-out image signal SP corresponding to the object image region in the X-ray image shown in Figure 1A, and a second region 8, which is represented by a mean-level value of the preliminary read-out image signal SP detected from the background region 6 in the X-ray image shown in Figure 1A. Also, the reversed pattern is composed of a first region 7, which is represented by a mean-level value of the preliminary read-out image signal SP corresponding to the object image region in the X-ray image shown in Figure 1B, and a second region 8, which is represented by a mean-level value of the preliminary read-out image signal SP detected from the background region 6 in the X-ray image shown in Figure 1B.

When the preliminary read-out image signal SP is fed into the computer system 40, pattern matching is carried out between the preliminary read-out image signal SP and each of the image signal SS representing the standard pattern shown in Figure 2A and the image signal SR representing the reversed pattern shown in Figure 2B. In this manner, a judgment is made as to whether the preliminary read-out image signal SP represents the X-ray image of the right shoulder or of the left shoulder. In this embodiment, during the pattern matching, calculations are made to find square values of differences between the image signal components of the preliminary read-out image signal SP and each of the image signals SS and SR, which image signal components represent corresponding picture elements in the preliminary read-out image signal SP and each of the image signals SS and SR, i.e. $(SS-SP)^2$ and $(SR-SP)^2$. The square values obtained for the whole area of the image are added, and sums QS and QR are calculated with the formulas

$$Q_S = \Sigma \, (S_S - S_P)^2 \tag{1}$$

$$Q_R = \Sigma \, (S_R - S_P)^2 \tag{2}$$

It is judged that the X-ray image represented by the preliminary read-out image signal SP is the image associated with the sums QS or QR, whichever is smaller.

In cases where it has been judged that the image represented by the preliminary read-out image signal SP is of the left shoulder (Figure 1B), the preliminary read-out image signal SP is processed such that the image represented by the preliminary read-out image signal SP is reversed. In this manner, an image signal corresponding to the image of the right shoulder shown in Figure 1A, or an image signal corresponding to the image of the left shoulder is always fed into a neural network, which will be described below.

In the manner described above, the image signal is processed such that the processed image signal represents the predetermined standard pattern (i.e. the pattern of the right shoulder in this embodiment). The processed image signal is then fed into the neural network. Therefore, the number of units constituting the neural network can be reduced, and the requirement of the storage capacity of a storage means for storing the weight coefficients, which represent the degrees of connections between the units, can be kept small. Also, the learning of the neural network can be finished quickly.

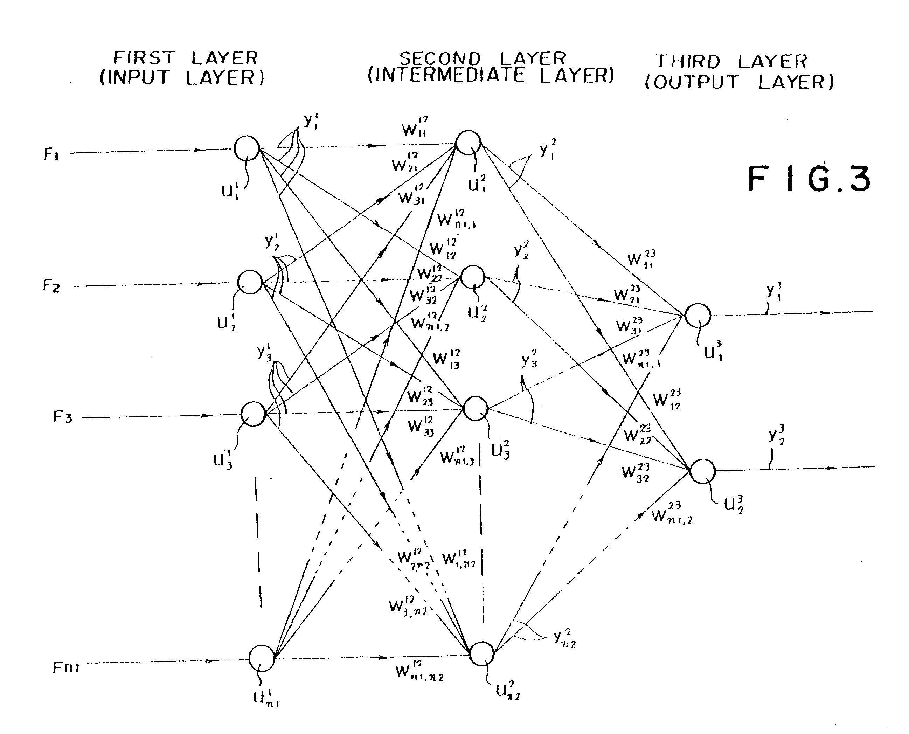

Figure 3 is an explanatory view showing an example of the neural network which is provided with a learning function by back propagation method. As described above, the term "learning function by back propagation method" as used herein means the learning algorithms in a neural network, with which the output of the neural network is compared with a correct answer (an instructor signal), and the weight of connections (i.e. the weight of synapse connections) is corrected sequentially from the output side to the input side of the neural network.

With reference to Figure 3, the neural network comprises a first layer (an input layer), a second layer (an intermediate layer), and a third layer (an output layer). The first, second, and third layers are composed respectively of n1 number of units, n2 number of units, and two units. Signals F1, F2, ..., Fn1 fed into the first layer (the input layer) are the image signal components of the preliminary read-out image signal SP representing the picture elements in the X-ray image (the reversed image in the cases of the images of the left shoulder). Two outputs $y_1^3$ and $y_2^3$ obtained from the third layer (the output layer) are the signals corresponding to the sensitivity and the contrast during the final readout. An i'th unit of a k'th layer is indicated by $u_i^k$. The total input into the unit $u_i^k$ is indicated by $x_i^k$, and the total output therefrom is indicated by $y_i^k$. The weight of connection from the unit $u_i^k$ to a unit $u_j^{k+1}$ is indicated by $W_{ij}^{k,k+1}$. Also, each unit $u_j^k$ has the same characteristic function, which is expressed as

$$f(x) = \frac{1}{1 - e^x} \tag{3}$$

The input $x_j^k$ into each unit $u_j^k$ and the output $y_j^k$ therefrom are expressed as

$$x_j^k = \sum_i W_i^{k-1}{}_j^k \cdot y_i^{k-1} \qquad \cdots (4)$$

$$y_j^k = f(x_j^k) \tag{5}$$

Inputs F1, F2, ..., Fn1 into the units $u_i^1$, where i=1, 2, ..., n1, which units constitute the input layer, are fed into the units $u_i^1$, where i=1, 2, ..., n1, without being weighted. The n1 number of signals F1, F2, ..., Fn1 are weighted with the weights of connection $W_{ij}^{k,kj+1}$, and transmitted to the ultimate outputs $y_1^3$ and $y_2^3$. In this manner, the read-out conditions for the final readout (i.e. the sensitivity and the contrast) are obtained.

How the weights of connection $W_{ij}^{k,kj+1}$ are determined will be described hereinbelow. First, initial values of the weights of connection $W_{ij}^{k,kj+1}$ are given by random numbers. The range of the random numbers should preferably be limited such that, even when the values of the inputs F1, F2, ..., Fn1 fluctuate to the largest extent, the outputs $y_1^3$ and $y_2^3$ may take values falling within a predetermined range or values close to said predetermined range.

Thereafter, preliminary read-out image signals are obtained in the manner described above from a plurality of stimulable phosphor sheets storing X-ray images of the right or left shoulder, for which the appropriate read-out conditions for the final readout are known. As for the X-ray images of the left shoulder, the preliminary read-out image signals are reversed. In this manner, the n1 number of inputs F1, F2, ..., Fn1 are obtained. The n1 number of inputs F1, F2, ..., Fn1 are fed into the neural network shown in Figure 3, and the outputs $y_i^k$ of the respective units $u_i^k$ are monitored.

After the outputs $y_i^k$ are obtained, square errors E1 and E2 between the ultimate outputs $y_1^3$, $y_2^3$ and the instructor signals (the sensitivity $\tilde{y}_1^3$ and the contrast $\tilde{y}_2^3$) representing the read-out conditions for the final readout appropriate for the image are calculated with the formulas

$$E_1 = \frac{1}{2} (y_1^3 - \tilde{y}_1^3)^2 \qquad \cdots (6)$$

$$E_2 = \frac{1}{2} (y_2^3 - \tilde{y}_2^3)^2 \qquad \cdots (7)$$

The weights of connection $W_{ij}^{k,k+1}$ are then corrected such that the square errors E1 and E2 become the smallest. The output $y_1^3$ will be described hereinbelow. The descriptions below also apply to the output $y_2^3$.

The square error E1 is a function of $W_{ij}^{k,k+1}$. Therefore, in order for the square error El to be minimized, the weights of connection $W_{ij}^{k,k+1}$ are corrected with the formula

$$W_{ij}^{k,k+1} = W_{ij}^{k,k+1} - \eta \bullet \frac{\partial E_1}{\partial W_{ij}^{k,k+1}} \qquad (8)$$

where $\eta$ denotes a coefficient, which is referred to as a learning coefficient.

The following formula obtains:

$$\frac{\partial E_1}{\partial W_{ij}^{k,k+1}} = \frac{\partial E_1}{\partial x_j^{k+1}} \frac{\partial x_j^{k+1}}{\partial W_{ij}^{k,k+1}} \qquad (9)$$

Also, Formula (4) gives

$$x_j^{k+1} = \sum_i W_{ij}^{k,k+1} \bullet y_i^k \qquad \cdots (4)'$$

Therefore, Formula (9) gives

$$\frac{\partial E_1}{\partial W_{ij}^{k,k+1}} = \frac{\partial E_1}{\partial x_j^{k+1}} \bullet y_i^k \qquad (10)$$

From Formula (6), the following formula obtains:

$$\frac{\partial E_1}{\partial x_1^3} = (y_1^3 - \tilde{y}_1^3) \bullet \frac{\partial y_1^3}{\partial x_1^3} \qquad \cdots (11)$$

Formula (11) can be changed with Formula (5) into

$$\frac{\partial E_1}{\partial x_1^3} = ( y_1^3 - \tilde{y}_1^3 ) \cdot f'( x_1^3 ) \quad \cdots (12)$$

From Formula (3), the following formula obtains:

$$f'(x) = f(x)(1 - f(x)) \tag{13}$$

Therefore,

$$f'(x_1^3) = y_1^3 \cdot (1 - y_1^3) \tag{14}$$

Setting k=2 in Formula (10) and substituting Formulas (12) and (14) into Formula (10) yield

$$\frac{\partial E_1}{\partial W_{i1}^{2\,3}} = \frac{\partial E_1}{\partial x_1^3} \cdot y_i^2$$

$$= ( y_1^3 - \tilde{y}_1^3 ) \cdot y_1^3 \cdot ( 1 - y_1^3 ) \cdot y_i^2$$

$$\cdots (15)$$

Substitution of Formula (15) into Formula (8) yields

$$W_{i1}^{2\,3} = W_{i1}^{2\,3} - \eta \cdot ( y_1^3 - \tilde{y}_1^3 ) \cdot y_1^3$$

$$\cdot ( 1 - y_1^3 ) \cdot y_i^2 \qquad \cdots (16)$$

The weights of connection $W_{i1}^{2\,3}$, where i=1, 2, 3, are corrected with Formula (16).
Also, the following formula obtains:

$$\frac{\partial E_1}{\partial x_j^2} = \frac{\partial E_1}{\partial x_1^3} \frac{\partial x_1^3}{\partial x_j^2} \tag{17}$$

Substitution of Formulas (4) and (5) into Formula (17) yields

$$\frac{\partial E_1}{\partial x_j^2} = \frac{\partial E_1}{\partial x_1^3} \cdot \frac{\partial}{\partial x_j^2} ( \sum_j W_{j1}^{2\,3} \cdot y_j^2 )$$

$$= \frac{\partial E_1}{\partial x_1^3} \cdot W_{j1}^{2\,3} \cdot f'( x_j^2 ) \qquad \cdots (18)$$

Formula (13) gives

$$f'(x_j^2) = y_j^2 \bullet (1 - y_j^2) \qquad (19)$$

Substitution of Formulas (12), (14), and (19) into Formula (18) yields

$$\frac{\partial E_1}{\partial x_j^2} = (y_i^3 - \widetilde{y_i^3}) \cdot y_i^3 \cdot (1 - y_i^3)$$

$$\cdot y_j^2 \cdot (1 - y_j^2) \cdot W_j^2{}_i^3 \qquad \cdots (20)$$

Setting k=1 in Formula (10) and substituting Formula (20) into Formula (10) yield

$$\frac{\partial E_1}{\partial W_i^1{}_j^2} = \frac{\partial E_1}{\partial x_j^2} \cdot y_i^1$$

$$= (y_i^3 - \widetilde{y_i^3}) \cdot y_i^3 \cdot (1 - y_i^3)$$

$$\cdot y_j^2 \cdot (1 - y_j^2) \cdot W_j^2{}_i^3 \cdot y_i^1$$

$$\cdots (21)$$

Substitution of Formula (21) into Formula (8) and setting of k=1 yield

$$W_i^1{}_j^2 = W_i^1{}_j^2 - \eta \cdot (y_i^3 - \widetilde{y_i^3}) \cdot y_i^3$$

$$\cdot (1 - y_i^3) \cdot y_j^2 \cdot (1 - y_j^2) \cdot y_i^1$$

$$\cdot w_j^2{}_i^3 \qquad \cdots (22)$$

The values of the weights of connection $W_i^2{}_1^3$, where i=1, 2, ..., n1, which have been corrected with Formula (16), are substituted into Formula (22). In this manner, the weights of connection $W_i^1{}_j^2$, where i=1, 2, ... , n1 and j=1 , 2, ..., n2, are corrected.

Theoretically, the weights of connection $W_i^k{}_j^{k+1}$ can be converged to predetermined values by using Formulas (16) and (22), using a sufficiently small learning coefficient $\eta$ and carrying out the learning operations very many times. However, if a sufficiently small learning coefficient $\eta$ is used, the speed with which the learning operations are effected will become low. If a very large learning coefficient $\eta$ is used, "vibration" will occur in the learning operations (i.e. the weights of connection do not converge to predetermined values). Therefore, actually, the vibration is prevented by employing an inertia term, which is expressed in Formula (23), in the calculations of the correction amounts for the weights of connection, and the learning coefficient $\eta$ is set to a slightly large value.

$$\Delta W_{ij}^{k\,k+1} (t+1) = \alpha \bullet \Delta W_{ij}^{k\,k+1} (t) +$$

$$\eta \bullet \frac{\partial E_1}{\partial x_j^{k+1}} \cdot y_i^k \qquad (23)$$

where $\alpha$ denotes the coefficient referred to as the inertia term, and $\Delta W_{ij}^{k\,k+1}$ (t) denotes the correction amount, which is used during the t'th learning operation and which is obtained by subtracting a weight of connection $W_{ij}^{k\,k+1}$ which has not been corrected, from a weight of connection $W_{ij}^{k\,k+1}$ which has been corrected. (Such an inertia term is described in, for example, "Learning internal representations by error propagation In Parallel Distributed Processing" by D. E. Rumelhart, G. E. Hinton and R. J. Williams, Volume 1, J. L. McClell and, D. E. Rumelhart and The PDP Research Group, MIT Press, 1986b.)

By way of example, the inertia term $\alpha$ is set to 0.9, the learning coefficient $\eta$ is set to 0.25, and 200,000 times of corrections (learning operations) are carried out for each of the weights of correction $W_{ij}^{k\,k+1}$. Thereafter, each of the weights of correction $W_{ij}^{k\,k+1}$ is fixed at a final value. At the time at which the learning operations are completed, the two outputs $y_1^3$ and $y_2^3$ represents the appropriate sensitivity and the appropriate contrast during the final readout.

Therefore, after the learning operations are completed, in order for appropriate read-out conditions for the final readout to be obtained, a preliminary read-out image signal SP representing an X-ray image is fed into the neural network shown in Figure 3. The outputs $y_1^3$ and $y_2^3$ obtained from the neural network are utilized as signals representing the read-out conditions (i.e. the sensitivity and the contrast) for the final readout appropriate for the X-ray image. Because the learning operations have been carried out in the manner described above, the signals accurately represent the appropriate read-out conditions for the final readout.

The number of layers of the neural network is not limited to three. Also, no limitation is imposed on the number of the units of each layer. The number of the units of each layer may be determined in accordance with the number of the picture elements represented by the preliminary read-out image signal SP, which is fed into the neural network, the accuracy, with which the read-out conditions for the final readout are to be obtained, or the like.

The voltage applied to the photomultiplier 21' of the final read-out means 100', the amplification factor of the logarithmic amplifier 26', and the like, are controlled in accordance with the read-out conditions for the final readout, which have been adjusted by the neural network. The final readout is carried out under the controlled conditions.

In the aforesaid embodiment, before the preliminary read-out image signal SP representing an X-ray image of the shoulder is fed into the neural network, pattern matching is effected with respect to the patterns shown in Figures 2A and 2B. A judgment is thereby made as to whether the X-ray image represented by the preliminary read-out image signal SP is the standard image (i.e. the image of the right shoulder) or the reversed image (i.e. the image of the left shoulder). In cases where the X-ray image represented by the preliminary read-out image signal SP is the reversed image (i.e. the image of the left shoulder), the preliminary read-out image signal SP is processed such that the processed image signal represents the standard image (i.e. the image of the right shoulder). The first apparatus in accordance with the present invention is not limited to the processing of images of the shoulder. For example, the first apparatus in accordance with the present invention is also applicable when images of the right and left hands, images of the right and left sides of the head or the abdomen, and the like, are processed.

Also, the first apparatus in accordance with the present invention is not limited to the processing of images reversed horizontally. For example, the first apparatus in accordance with the present invention is also applicable when an image is to be rotated into a normal orientation in cases where an image signal representing an inclined image is obtained due to oblique setting of a stimulable phosphor sheet during the image recording operation, or an image signal representing a laterally inclined image or an inverted image is obtained due to setting of a stimulable phosphor sheet in an incorrect direction during the image read-out operation. The first apparatus in accordance with the present invention is also applicable when images having different scales of enlargement (or reduction), which are obtained from, for example, a direct image recording operation and fluorography, are to be corrected. The first apparatus in accordance with the present invention is further applicable when position adjustment is to be carried out such that an object image region may be located at the center area of an image in cases where the object image pattern was recorded at a peripheral part of the image. Additionally, the first apparatus in accordance with the present invention is applicable when a combination of the aforesaid processes is to be carried out.

In the aforesaid embodiment, the preliminary read-out means 100 and the final read-out means 100' are separate from each other. Alternatively, because the configurations of the preliminary read-out means 100 and the final read-out means 100' are approximately identical to each other, a single read-out means may be utilized for performing both the preliminary readout and the final readout. In this case, after being subjected to the preliminary readout, the stimulable phosphor sheet 11 may be moved back to the position at which image readout is started. Thereafter, the final readout may be carried out.

In cases where a single read-out means is utilized to perform both the preliminary readout and the final readout, it is necessary to change the intensity of the light beam used in the preliminary readout and the final readout. For this purpose, various methods may be employed as described above, for example, a laser beam source or the like may change the intensity of the light beam.

In the aforesaid embodiment, the read-out conditions for the final readout are adjusted by the computer system 40. Alternatively, predetermined read-out conditions may be used when the final readout is carried out regardless of the characteristics of the preliminary read-out image signal SP. On the basis of the preliminary read-out image signal SP, the computer system 40 may adjust the image processing conditions to be used in carrying out image processing of the image signal SQ. The computer system 40 may also adjust both the read-out conditions and the image processing conditions.

The aforesaid embodiment is applied to the radiation image read-out apparatus wherein the preliminary readout is carried out. However, the first apparatus in accordance with the present invention is also applicable to radiation image read-out apparatuses wherein no preliminary read-out operations are carried out, and only the aforesaid final read-out operations are carried out. In these cases, an image signal is obtained by use of predetermined read-out conditions. Based on the image signal, image processing conditions are calculated by the computer system 40. The image signal is processed under the calculated image processing conditions.

An embodiment for adjusting read-out conditions and/or image processing conditions for a radiation image, in accordance with the present invention will be described hereinbelow. In this embodiment, a stimulable phosphor sheet is used, and an X-ray image having a pattern of the shoulder joint of a human body as a region of interest is processed.

Figures 6A and 6B are explanatory views showing X-ray images of the shoulder joint, which images have been stored on stimulable phosphor sheets 11 in the X-ray image recording apparatus shown in Figure 4 in the manner described above.

In this embodiment, in the computer system 40 shown in Figure 5, the read-out conditions for the final readout are adjusted on the basis of the preliminary read-out image signal SP in the manner described below.

By using the X-ray image read-out apparatus shown in Figure 5, preliminary read-out image signals are obtained in the manner described above from a plurality of stimulable phosphor sheets storing X-ray images having a shoulder joint pattern 9 as shown in Figures 6A and 6B, for which the appropriate read-out conditions for the final readout are known. In this manner, the n1 number of inputs F1, F2, ..., Fn1 are obtained. In this embodiment, under the appropriate read-out conditions for the final readout, an image signal is obtained which represents an X-ray image such that the pattern of the shoulder joint 9 may have an appropriate image density.

The n1 number of inputs F1, F2, ..., Fn1 are fed into the neural network shown in Figure 3, and the learning operations of the neural network are carried out in the same manner as that described above. At the time at which the learning operations are completed, the two outputs $y_1^3$ and $y_2^3$ represents the appropriate sensitivity and the appropriate contrast during the final readout (i.e. such that the pattern of the shoulder joint 9 may have an appropriate image density in a reproduced X-ray image).

Therefore, after the learning operations are completed, in order for appropriate read-out conditions for the final readout to be obtained, a preliminary read-out image signal SP representing an X-ray image is fed into the neural network shown in Figure 3. The outputs $y_1^3$ and $y_2^3$ obtained from the neural network are utilized as signals representing the read-out conditions (i.e. the sensitivity and the contrast) for the final readout appropriate for the X-ray image. Because the learning operations have been carried out in the manner described above, the signals accurately represent the appropriate read-out conditions for the final readout.

The voltage applied to the photomultiplier 21' of the final read-out means 100', the amplification factor of the logarithmic amplifier 26', and the like, are controlled in accordance with the read-out conditions for the final readout, which have been adjusted by the neural network. The final readout is carried out under the controlled conditions.

In the aforesaid embodiment, the read-out conditions for the final readout are adjusted by the computer system 40. Alternatively, predetermined read-out conditions may be used when the final readout is carried out regardless of the characteristics of the preliminary read-out image signal SP. On the basis of the preliminary read-out image signal SP, the computer system 40 may adjust the image processing conditions to be used in carrying out image processing of the image signal SQ. The computer system 40 may also adjust both the read-out conditions and the image processing conditions.

## Claims

1. An apparatus for adjusting read-out conditions and/or image processing conditions for a radiation image on the basis of image signals, which have been obtained by the following steps:

a first image signal (Sp) representing a radiation image of an object is obtained by exposing a stimulable phosphor sheet (11), on which the radiation image has been stored, to stimulating rays, which cause the stimulable phosphor sheet to emit light in proportion to the amount of energy stored thereon during its exposure to radiation, the emitted light being detected,

a second image signal (S) representing the radiation image is thereafter obtained by again exposing the stimulable phosphor sheet to stimulating rays, the light emitted by the stimulable phosphor sheet being detected, wherein read-out conditions, under which the second image signal is to be obtained, and/or image processing conditions, under which the second image signal having been obtained is to be image processed, are adjusted on the basis of the first image signal,

the apparatus for adjusting read-out conditions and/or image processing conditions for a radiation image comprising:

i) a storage means (40, 42) for storing information representing a standard pattern of radiation images, e.g. a pattern having a predetermined orientation,

ii) a signal transforming means (40) for transforming said first image signal representing said radiation image into a transformed image signal representing the radiation image, which has been transformed according to said standard pattern, and

iii) a condition adjusting means (40) provided with a neural network, which receives said transformed image signal and feeds out information representing the read-out conditions and/or the image processing conditions.

2. An apparatus for adjusting read-out conditions and/or image processing conditions for a radiation image as defined in claim 1 wherein said transformation of said first image signal representing said radiation image into a transformed image signal representing the radiation image, which has been transformed according to said standard pattern, is one of reversal, rotation, position adjustment, enlargement, and reduction of said radiation image represented by said first image signal, or a combination of two or more of these processes.

3. An apparatus for adjusting image processing conditions for a radiation image on the basis of an image signal representing a radiation image of an object,
   the apparatus for adjusting image processing conditions for a radiation image comprising:

   i) a storage means (40, 42) for storing information representing a standard pattern of radiation images, e.g. a pattern having a predetermined orientation;

   ii) a signal transforming means (40) for transforming said image signal representing said radiation image into a transformed image signal representing the radiation image, which has been transformed into said standard pattern, and

   iii) a condition adjusting means (40) provided with a neural network, which receives said transformed image signal and feeds out information representing the image processing conditions.

4. An apparatus for adjusting image processing conditions for a radiation image as defined in claim 3 wherein said transformation of said image signal representing said radiation image into a transformed image signal representing the radiation image, which has been transformed into said standard pattern, is one of reversal, rotation, position adjustment, enlargement, and reduction of said radiation image represented by said image signal, or a combination of two or more of these processes.


**Patentansprüche**

1. Vorrichtung zum Einstellen von Auslesebedingungen und/oder Bildverarbeitungsbedingungen für ein Strahlungsbild auf der Grundlage von Bildsignalen, die durch folgende Schritte gewonnen wurden:

   ein erstes Bildsignal (Sp), welches ein Strahlungsbild eines Objekts repräsentiert, wird dadurch erhalten, daß ein anregbares Leuchtstoffblatt (11), auf dem ein Strahlungsbild gespeichert wurde, Anregungsstrahlen ausgesetzt wird, die das anregbare Leuchtstoffblatt veranlassen, Licht im Verhältnis zu der während seiner Strahlungsexposition gespeicherten Energiemenge zu emittieren, wobei das emittierte Licht erfaßt wird,

ein zweites Bildsignal (S), welches das Strahlungsbild repräsentiert, wird anschließend dadurch erhalten, daß das anregbare Leuchtstoffblatt erneut Anregungsstrahlen ausgesetzt wird, das von dem anregbaren Leuchtstoffblatt emittierte Licht erfaßt wird, wobei Auslesebedingungen, unter denen das zweite Bildsignal zu erhalten ist, und/oder Bildverarbeitungsbedingungen, unter denen das gewonnene zweite Bildsignal einer Bildverarbeitung zu unterziehen ist, auf der Grundlage des ersten Bildsignals eingestellt werden,

wobei die Vorrichtung zum Einstellen von Auslesebedingungen und/oder Bildverarbeitungsbedingungen für das Strahlungsbild aufweist:

i) eine Speichereinrichtung (40, 42) zum Speichern von Informationen, die ein Standardmuster von Strahlungsbildern repräsentiert, beispielsweise ein Muster mit einer vorbestimmten Orientierung,

ii) eine Signaltransformiereinrichtung (40) zum Transformieren des das Strahlungsbild repräsentierenden ersten Bildsignals in ein transformiertes Bildsignal, welches das Strahlungsbild repräsentiert, das entsprechend dem Standardmuster transformiert wurde, und

iii) eine Bedingungseinstelleinrichtung (40), die mit einem neuronalen Netzwerk ausgestattet ist, welches das transformierte Bildsignal empfängt und Information ausgibt, welche die Auslesebedingungen und/oder die Bildverarbeitungsbedingungen repräsentiert.

2. Vorrichtung zum Einstellen von Auslesebedingungen und/oder Bildverarbeitungsbedingungen für ein Strahlungsbild nach Anspruch 1, bei der die Transformation des das Strahlungsbild repräsentierenden ersten Bildsignals in ein transformiertes Bildsignal, das das Strahlungsbild repräsentiert, welches entsprechend dem Standardmuster transformiert wurde, einer Umkehr, einer Drehung, einer Positionseinstellung, einer Vergrößerung oder einer Verkleinerung des durch das erste Bildsignal repräsentierten Strahlungsbilds, oder einer Kombination von zweiten oder mehreren dieser Prozesse entspricht.

3. Vorrichtung zum Einstellen von Bildverarbeitungsbedingungen für ein Strahlungsbild auf der Grundlage eines Bildsignals, welches ein Strahlungsbild eines Objekts repräsentiert, wobei die Vorrichtung zum Einstellen von Bildverarbeitungsbedingungen für ein Strahlungsbild umfaßt:

i) eine Speichereinrichtung (40, 42) zum Speichern von Information, die ein Standardmuster von Strahlungsbildern, beispielsweise ein Muster mit einer vorbestimmten Orientierung, repräsentiert;

ii) eine Signaltransformiereinrichtung (40) zum Transformieren des Bildsignals, welches das Strahlungsbild repräsentiert, in ein transformiertes Bildsignal, welches das in das Standardmuster transfornuerte Strahlungsbild repräsentiert, und

iii) eine Bedingungseinstelleinrichtung (40), die mit einem neuronalen Netzwerk ausgestattet ist, welches das transformierte Bildsignal empfängt und Information ausgibt, die die Bildverarbeitungsbedingungen repräsentiert.

4. Vorrichtung zum Einstellen von Bildverarbeitungsbedingungen für ein Strahlungsbild nach Anspruch 3, bei der die Transformation des das Strahlungsbild repräsentierenden Bildsignals in ein das in das Standardmuster transformierte Bildsignal repräsentierende Bildsignal einer Umkehr, einer Drehung, einer Positionseinstellung, einer Vergrößerung oder einer Verkleinerung des durch das Bildsignal repräsentierten Strahlungsbilds oder einer Kombination aus zweiten oder mehreren dieser Prozesse entspricht.


**Revendications**

1. Appareil pour régler des conditions de lecture et/ou des conditions de traitement d'image pour une image de rayonnement sur la base de signaux d'image qui ont été obtenus au moyen des étapes qui suivent :

un premier signal d'image (Sp) qui représente une image de rayonnement d'un objet est obtenu en exposant une feuille de phosphore stimulable (11) sur laquelle l'image de rayonnement a été stockée à des rayons de stimulation, lesquels rayons de stimulation ont pour effet que la feuille de phosphore stimulable émet une lumière en proportion de la quantité d'énergie stockée dessus pendant son exposition à un rayonnement, la lumière émise étant détectée ;

un second signal d'image (S) représentant l'image de rayonnement est ensuite obtenu en exposant à nouveau la feuille de phosphore stimulable à des rayons de stimulation, la lumière émise par la feuille de phosphore stimulable étant détectée, où des conditions de lecture sous lesquelles le second signal d'image doit être obtenu et/ou des conditions de traitement d'image sous lesquelles le second signal d'image qui a été obtenu doit être traité du point de vue de l'image sont réglées sur la base du premier signal d'image,

l'appareil pour régler des conditions de lecture et/ou des conditions de traitement d'image pour une image de rayonnement comprenant :

i) un moyen de stockage (40, 42) pour stocker une information représentant un motif standard d'images de rayonnement, par exemple un motif présentant une orientation prédéterminée ;
ii) un moyen de transformation de signal (40) pour transformer ledit premier signal d'image représentant ladite image de rayonnement selon un signal d'image transformé représentant l'image de rayonnement, qui a été transformé conformément audit motif standard ; et
iii) un moyen de réglage de condition (40) muni d'un réseau neural, qui reçoit ledit signal d'image transformé et qui applique en sortie une information représentant les conditions de lecture et/ou les conditions de traitement d'image.

2. Appareil pour régler des conditions de lecture et/ou des conditions de traitement d'image pour une image de rayonnement selon la revendication 1, dans lequel ladite transformation dudit premier signal d'image représentant ladite image de rayonnement selon un signal d'image transformé représentant l'image de rayonnement, qui a été transformé conformément audit motif standard, est une transformation prise parmi une inversion, une rotation, un réglage de position, un agrandissement et une réduction de ladite image de rayonnement représentée par ledit premier signal d'image ou une combinaison de deux ou plus de ces processus.

3. Appareil pour régler des conditions de traitement d'image pour une image de rayonnement sur la base d'un signal d'image représentant une image de rayonnement d'un objet, l'appareil pour régler les conditions de traitement d'image pour une image de rayonnement comprenant :

i) un moyen de stockage (40, 42) pour stocker une information représentant un motif standard d'images de rayonnement, par exemple un motif présentant une orientation prédéterminée ;
ii) un moyen de transformation de signal (40) pour transformer ledit signal d'image représentant ladite image de rayonnement selon un signal d'image transformé représentant l'image de rayonnement, qui a été transformé selon ledit motif standard ; et
iii) un moyen de réglage de condition (40) muni d'un réseau neural, qui reçoit ledit signal d'image transformé et qui applique en sortie une information représentant les conditions de traitement d'image.

4. Appareil pour régler des conditions de traitement d'image pour une image de rayonnement selon la revendication 3, dans lequel ladite transformation dudit signal d'image représentant ladite image de rayonnement selon un signal d'image transformé représentant l'image de rayonnement, qui a été transformé selon ledit motif standard, est un processus pris parmi une inversion, une rotation, un réglage de position, un agrandissement et une réduction de ladite image de rayonnement représentée par ledit signal d'image ou une combinaison de deux ou plus de ces processus.

# F I G .1A

# F I G .1B

# F I G .2A

# F I G .2B

FIRST LAYER
(INPUT LAYER)

SECOND LAYER
(INTERMEDIATE LAYER)

THIRD LAYER
(OUTPUT LAYER)

FIG.3

EP 0 452 915 B1

# F I G . 4

# FIG.5

# F I G.6A

# F I G.6B

# F I G.7A

FREQ.

IMAGE SIGNAL VALUE
(AMOUNT OF EMITTED LIGHT)

# F I G.7B

FREQ.

IMAGE SIGNAL VALUE
(AMOUNT OF EMITTED LIGHT)